# EUROPEAN PATENT APPLICATION

(11) **EP 3 424 992 A1**
(43) Date of publication of application: **09.01.2019**
(21) Application number: 17759545.1
(22) Date of filing: 03.02.2017
(51) Int. Cl.: C08J 7/00

(54) **METHOD FOR PHOTO-HARDENING SILICONE RUBBER SURFACE, AND MOLDED SILICONE RUBBER**

(30) Priority: 04.03.2016 JP 2016041956
(71) Applicant: Shin-Etsu Chemical Co., Ltd., Tokyo 100-0004 (JP)
(72) Inventor: HIGUCHI Koichi, Annaka-shi Gunma 379-0224 (JP); KIMURA Tsuneo, Annaka-shi Gunma 379-0224 (JP)
(74) Representative: Stoner, Gerard Patrick
(86) International application number: PCT/JP2017/004045
(87) International publication number: WO 2017/150074

(57) **Abstract**

A method for photo-hardening a silicone rubber surface, the method comprising a step (A) in which a surface of a molded silicone rubber is irradiated using, for example, a xenon excimer lamp with vacuum ultraviolet light having a wavelength of 200 nm or less at an irradiation energy in the range of 10-3,000 mJ/cm², thereby forming an oxide layer in the irradiated portion by photooxidation and thus hardening the portion. According to the method, it is possible to harden the surface of the silicon rubber into a wear-resistant surface without causing a change in gloss and while keeping the rubbery feeling intact. It is also possible to improve the oil infiltration resistance of the rubber.

## Description

### TECHNICAL FIELD

The present invention relates to a method of photohardening a silicone rubber surface, and to a silicone rubber molded body.

### BACKGROUND ART

The rubber surfaces of silicone rubber molded articles have hitherto been decorated by the placement of lettering, designs and stamped markings thereon and by coloring, printing and the like. These decorated surfaces are abraded by contact with clothing, fingers, etc., resulting in a loss of decorativeness when they fade and become impossible to make out.

Hence, in order to improve the abrasion resistance of silicone rubber surfaces, efforts have been made to provide hard silicone coatings that can confer the rubber surfaces with low friction properties.

For example, Patent Document 1 discloses an applied film having surface slip that is composed of a phenyl block polymer to which a small amount of dimethylpolysiloxane has been added. However, cracks arise in this film because it is unable to follow rubber.

Patent Documents 2 to 4 disclose, as compositions which provide high-strength applied films that also have surface slip, condensation-curable compositions that are based on the condensation product of an organosiloxane consisting of R₃SiO_{1/2} units and SiO_{4/2} units and a diorganopolysiloxane in which the ends of the molecular chain are capped with functional group-containing silyl groups. However, these publications make no mention of the abrasion resistance of the applied film surface.

Moreover, in the composition of Patent Document 2, topics such as imparting surface irregularity by adding a filler such as wet silica or dry silica, surface hardening by adding a phenyl block polymer, and rendering the surface irregular by adding a titanic acid ester were investigated. Yet, none of these approaches resulted in improved surface abrasion resistance, and undesirable effects such as surface tack and cracking were found to arise.

Thus, methods of applying silicone coatings such as those in the above patent literature result not only in a glossy surface appearance and loss of the rubbery sensation and feel, but because a hard silicone coating has substantially no stretch, the resulting film is unable to follow the deformation and elongation of molded articles, gaskets and packings, giving rise to surface checking and cracking.

Also, coating entails complex operations and, in silicone rubber moldings that have been integrally molded with a resin substrate, changes in the resin properties due to heat are a problem.

Moreover, in addition reaction-type coatings, there is also a risk of curing defects and surface tack arising on account of the influence of addition poisons from the molded article or from the environment.

Furthermore, in silicone rubbers, the infiltration and passage of moisture, salts, oils and other components of perspiration through the silicone rubber sometimes gives rise to contact faults and a diminished sensation to the touch. Protective layers obtained from silicone coatings have been unable to resolve such problems.

### PRIOR ART DOCUMENTS

### PATENT DOCUMENTS

Patent Document 1: JP-A 2010-100667
Patent Document 2: JP-A 2004-143331
Patent Document 3: JP No. 5521905
Patent Document 4: JP No. 5644556

### SUMMARY OF INVENTION

### TECHNICAL PROBLEM

It is therefore an object of this invention to provide a method of photohardening a silicone rubber surface that is able to harden a silicone rubber surface to an abrasion-resistant surface without altering the surface gloss and while leaving the rubbery feel intact, and that moreover can enhance the oil infiltration resistance of the rubber. A further object of the invention is to provide a method for producing a silicone rubber molded body having a hardened surface.

### SOLUTION TO PROBLEM

The inventors have conducted extensive investigations in order to achieve these objects. As a result, they have discovered that by irradiating silicone rubber with vacuum ultraviolet light at a specific irradiation energy, an oxidized layer due to photooxidation reactions forms at the surface of the silicone rubber, enabling the rubber surface to be hardened without increasing the gloss and while retaining the feel and touch, such as the tack, of the rubber. Moreover, they have found that the hardened rubber surface has an excellent abrasion resistance.

Accordingly, the invention provides:
1. A method of photohardening a silicone rubber surface, comprising the step of:
   (A) hardening the surface of a silicone rubber molded body by irradiating the surface with vacuum ultraviolet light having a wavelength of 200 nm or less at an irradiation energy in the range of 10 to 3,000 mJ/cm² so as to form an oxidized layer in the irradiated region due to photooxidation reactions;
2. The silicone rubber surface photohardening method of 1 above, wherein the vacuum ultraviolet light is irradiated in an inert gas atmosphere;
3. The silicone rubber surface photohardening method of 1 or 2 above, wherein the source of the vacuum ultraviolet light is a xenon excimer lamp;
4. The silicone rubber surface photohardening method of any of 1 to 3 above, further comprising the step of:
   (B) aging the silicone rubber molded body that was photoirradiated in Step (A) at a temperature of not more than 150°C;
5. A method for producing a silicone rubber molded body having a hardened surface, comprising the step of:
   (A) hardening the surface of a silicone rubber molded body by irradiating the surface with vacuum ultraviolet light having a wavelength of 200 nm or less at an irradiation energy in the range of 10 to 3,000 mJ/cm² so as to form an oxidized layer in the irradiated region due to photooxidation reactions;
6. The method for producing a silicone rubber molded body having a hardened surface of 5 above, further comprising the step of:
   (B) aging the silicone rubber molded body that was photoirradiated in Step (A) at a temperature of not more than 150°C; and
7. A silicone rubber molded body having, on at least a portion of the surface thereof, a photooxidized layer.

### ADVANTAGEOUS EFFECTS OF INVENTION

The inventive method of photohardening a silicone rubber surface enables an abrasion-resistant surface to be easily formed on a silicone rubber molded body with no change in the sensation to the touch, no increase in gloss and no cracking.

The silicone rubber molded body having a hardened surface obtained by the method of the invention can be advantageously used as a protective cover for various types of electronic devices, as a keypad in cell phones, smart phones and remote controls, and as silicone rubber rollers in electrophotographic copiers and printers.

### BRIEF DESCRIPTION OF DRAWINGS

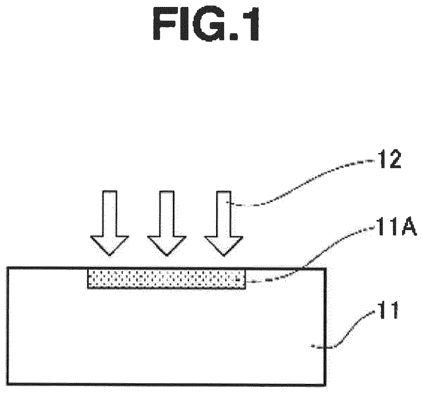

[FIG. 1] FIG. 1 is a schematic diagram showing an embodiment of the photohardening method of the invention.

### DESCRIPTION OF EMBODIMENTS

The invention is described in detail below.

The inventive method of photohardening a silicone rubber surface includes the step (A) of hardening the surface of a silicone rubber molded body by irradiating the surface with vacuum ultraviolet light having a wavelength of 200 nm or less at an irradiation energy in the range of 10 to 3,000 mJ/cm² so as to form an oxidized layer in the irradiated region due to photooxidation reactions.

By thus carrying out exposure to high energy rays using vacuum ultraviolet light having a wavelength of 200 nm or less, it is thought that most pendent organic groups in silicone rubber surface molecules are cleaved, resulting in the formation of Si-O-Si linkages having an intervening oxygen, which hardens the rubber surface and increases its abrasion resistance.

Specific examples of silicone rubbers that can be used in this invention include, without particular limitation, the following that have hitherto been used for molding various types of silicone rubber molded articles: millable silicone rubbers that are obtained by peroxide vulcanization, and liquid silicone rubbers for injection molding that are obtained by hydrosilylation crosslinking.

The shape of the silicone rubber surface is not particularly limited and may be flat or curved, so long as it is suitable for the stamping or printing of lettering and illustrations. Carrying out the photohardening of the invention on a surface that has been decorated in this way is particularly effective because the loss of such decorative features due to abrasion, scuffing and the like is reduced.

The irradiation energy of the vacuum ultraviolet light is not particularly limited, provided that it gives rise to photooxidation reactions as described above and forms an oxidized layer, enabling the surface to be hardened and the abrasion resistance to be increased. However, to induce sufficient photooxidation reactions and harden the surface while at the same time suppressing excess photoreactions, holding down an increase in glossiness of the rubber surface and preventing a decrease in the rubbery feel, the range of 10 to 3,000 mJ/cm² is preferred, 100 to 2,500 mJ/cm² is more preferred, 300 to 2,500 mJ/cm² is even more preferred, and 400 to 2,500 mJ/cm² is still more preferred.

The vacuum ultraviolet light irradiation time varies according to such factors as the intensity of the irradiation energy and the thickness of the subsequently described oxidized layer, and therefore cannot be strictly specified. However, within the above irradiation energy range, the irradiation time is generally from 5 seconds to one hour, and preferably from 10 seconds to 30 minutes.

Specific examples of light sources for irradiating vacuum ultraviolet light include xenon (Xe) excimer lamps (center wavelength, 172 nm), Kr excimer lamps (146 nm), Ar excimer lamps (126 nm), ArBr excimer lamps (165 nm), ArCl excimer lamps (175 nm), ArF excimer lamps (193 nm), F2 excimer lasers (153 nm), low-pressure mercury vapor lamps (185 nm) and synchrotron radiation. Of these, Xe excimer lamps, which are widely used for many purposes, are preferred.

The atmosphere and pressure ranges under which vacuum ultraviolet light is irradiated are not particularly limited, so long as photooxidation reactions like that described above are induced and an oxidized layer is formed, enabling the surface to be hardened and the abrasion resistance to be enhanced.

Irradiation may be carried out in an open-air atmosphere or in an inert gas atmosphere. However, when irradiation is carried out in the presence of oxygen, the intensity of the vacuum ultraviolet light decreases; hence, irradiation in an inert gas atmosphere is preferred. The volumetric ratio of oxygen is preferably 18 vol% or less, more preferably 10 vol% or less, and even more preferably 5 vol% or less.

The pressure during irradiation may range from a vacuum to atmospheric pressure. However, setting the pressure to a vacuum (reduced pressure) not only creates a need for special equipment and facilities such as vacuum pumps, the number of operations also increases. Hence, atmospheric pressure is preferred.

The portion of the silicone rubber molded body that is irradiated with vacuum ultraviolet light is not particularly limited; that is, the silicone rubber molded body may be irradiated over its entire surface or may be irradiated only in a specific region where the above-mentioned decorative features have been applied.

When irradiated only in a specific region, the regions that do not require irradiation may be suitably masked with a known masking material.

In the photohardening method of the invention, the thickness of the oxidized layer that forms on the surface of the silicone rubber molded body is not particularly limited. However, to impart sufficient abrasion resistance to the rubber surface and also prevent increased gloss at the rubber surface, the appearance of checking and cracking and loss of the rubbery feel, the thickness is preferably from 0.1 nm to 1 µm, and more preferably from 0.2 nm to 500 nm.

The indicator of hardening used here is the difference in the arithmetic mean thickness (ΔRa) before and after abrasion when, using a Gakushin-type abrasion tester, a piece of flannel having a width of 20 mm and a length of 40 mm in accordance with JIS L 0803 is attached to the tip of the stylus and, under 200 g loading, is moved back-and-forth 4,000 times over a distance of 50 mm at a speed of 30 cycles per minute over the silicone rubber surface. The arithmetic mean thickness (ΔRa) is preferably not more than 0.2 µm, and more preferably not more than 0.1 µm.

In addition, the method of the invention may further include the step (B) of aging the silicone rubber molded body that was photoirradiated in Step (A).

By thus aging the silicone molded body following step (A), bonding between oxygen-containing end groups such as SiOH is promoted, resulting in the formation of Si-O-Si bonds, which enables further hardening.

The aging temperature is not particularly limited, provided it is in a range that promotes the bonding of SiOH groups, although a range of from 20 to 150°C is preferred.

The aging time is not particularly limited, although in the above-mentioned temperature range, the time is typically from about 10 minutes to about 5 hours, and preferably from 30 minutes to 2 hours.

The aging atmosphere is similar to that for vacuum ultraviolet light irradiation. Aging may be carried out under the atmosphere used at the time of irradiation, although it is preferably carried out in open air.

Next, an embodiment of the photohardening method of the invention is described while referring to the diagram.

As shown in FIG. 1, vacuum ultraviolet light 12 having a wavelength of 200 nm or less is irradiated onto a portion of the surface of a silicone rubber molded body 11.

This gives rise to photooxidation reactions at the vacuum ultraviolet light-irradiated surface of the silicone rubber molded body 11, as a result of which an oxidized layer 11A forms and hardens to an abrasion-resistant surface, thereby giving a silicone rubber molded body 11 having a hardened surface.

Parameters such as the vacuum ultraviolet light irradiation direction and irradiation site and the shape of the silicone rubber molded body are not limited to those in the foregoing embodiment and may be set as desired.

### EXAMPLES

The invention is illustrated more fully below by way of Working Examples and Comparative Examples, although the invention is not limited by these Examples.

### Working Example 1

Liquid injection molding (LIM) was carried out using a liquid silicone rubber (KET-6026-70A/B, from Shin-Etsu Chemical Co., Ltd.), thereby producing a sheet RA having a thickness of 2 mm and a 150 mm × 150 mm shape.

Next, under a nitrogen atmosphere (oxygen concentration, ≤1 vol%) and using a xenon excimer lamp irradiation unit (SCQ05, from Ushio Inc.), the sheet RA was irradiated at an irradiation intensity of 10 mW/cm² for an irradiation time of 1 minute and at an irradiation energy of 600 mJ/cm² with vacuum ultraviolet light having a center wavelength of 172 nm, thereby giving a silicone rubber sheet A.

### Working Example 2

Aside from setting the irradiation energy to 1,200 mJ/cm², a silicone rubber sheet B was obtained in the same way as in Working Example 1.

### Working Example 3

Aside from setting the irradiation energy to 2,400 mJ/cm², a silicone rubber sheet C was obtained in the same way as in Working Example 1.

### Working Example 4

Aside from making the irradiation atmosphere a vacuum (1.3 kPa) and setting the irradiation energy to 450 mJ/cm², a silicone rubber sheet D was obtained in the same way as in Working Example 1.

### Working Example 5

Following the completion of irradiation, the silicone rubber sheet D obtained in Working Example 4 was heated for one hour in a 120°C oven in open air, thereby giving a silicone rubber sheet E.

### Comparative Example 1

Aside from setting the irradiation energy to 3,600 mJ/cm², a silicone rubber sheet RB was obtained in the same way as in Working Example 1.

### Comparative Example 2

A silicone coating material (X-33-258, from Shin-Etsu Chemical Co., Ltd.) was impregnated into K-Dry 132-S (from Nippon Paper Crecia Co., Ltd.), coated onto a silicone rubber RA produced in the same way as in Working Example 1 and then cured for two days at a temperature of 25°C and a relative humidity of 45%, giving a silicone rubber sheet RC.

### Comparative Example 3

Aside from changing the silicone coating material X-33-258 (Shin-Etsu Chemical Co., Ltd.) to the silicone coating material X-93-1755-1 (Shin-Etsu Chemical Co., Ltd.), a silicone rubber sheet RD was obtained in the same way as in Comparative Example 3.

The silicone rubber sheets produced in Working Examples 1 to 5 and Comparative Examples 1 to 3 and the silicone rubber sheet RA (Comparative Example 4) produced in Working Example 1 were subjected to the following evaluations. The results are presented in Tables 1 and 2.

### Visual Appearance

The silicone rubber sheets were visually examined for a change in gloss and the absence/presence of surface checking.

### Microscopic Examination

The silicone rubber sheets were examined for the absence/presence of cracks with a 20× optical microscope.

### Sensation to the Touch

The sensation to the touch of the sheet surface was checked.

### Appearance following Abrasion Test

Using a Gakushin-type abrasion tester (HEIDON 18 Scratching Intensity Tester, from Shinto Scientific Co., Ltd.), a piece of flannel cloth having a width of 20 mm and a length of 40 mm in accordance with JIS L 0803 was attached to the tip of the stylus and, under 200 g loading, was moved back and forth 4,000 times over a distance of 50 mm at a speed of 30 cycles per minute over the silicone rubber surface, following which the abrasion track on the sheet surface was visually examined and rated based on the following levels.
Level 4: No abrasion track (same as sheet RA)
Level 3: Abrasion track is not very noticeable
Level 2: Abrasion track is noticeable
Level 1: Abrasion track is clearly visible

### Resistance to Oil Infiltration

Stearic acid colored with phenol red was applied to the silicone rubber surface and held for 72 hours in an 80°C oven, following which the silicone rubber was cut and the degree of coloration of the cut face was examined.

### Arithmetic Mean Roughness Difference (ΔRa)

Using a laser microscope (VK-8710, from Keyence Corporation), the surface shape of the silicone rubber surface before and after abrasion was measured. The arithmetic mean roughness (Ra) was measured over an observation area of 100 µm and the difference in mean roughness before and after abrasion (ΔRa) was determined.

**Table 1**

| | Working Example | | | | |
|---|---|---|---|---|---|
| | 1 | 2 | 3 | 4 | 5 |
| Silicone rubber sheet | A | B | C | D | E |
| Irradiation atmosphere | Nitrogen (O₂ concentration ≤ 1%) | Nitrogen (O₂ concentration ≤ 1%) | Nitrogen (O₂ concentration ≤ 1%) | Vacuum (1.3 KPa) | Vacuum (1.3 KPa) |
| Irradiation intensity (mW/cm²) | 10 | 10 | 10 | 15 | 15 |
| Irradiation time (min) | 1 | 2 | 4 | 0.5 | 0.5 |
| Irradiation energy (mJ/cm²) | 600 | 1,200 | 2,400 | 450 | 450 |
| Heating time (h) | - | - | - | - | 1 |
| Visual appearance | no gloss | no gloss | no gloss | no gloss | no gloss |
| Microscopic appearance | no cracks | no cracks | no cracks | no cracks | no cracks |
| Sensation to the touch | rubbery tack | slightly hard slight tack | slightly hard slight tack | rubbery tack | slightly hard slight tack |
| Appearance after abrasion test | Level 3 | Level 4 | Level 4 | Level 3 | Level 4 |
| Arithmetic mean roughness difference (ΔRa) | 0.09 | 0.08 | 0.04 | 0.08 | 0.07 |
| Oil infiltration resistance | slight coloration | no coloration | no coloration | slight coloration | no coloration |

**Table 2**

| | Comparative Example | | | |
|---|---|---|---|---|
| | 1 | 2 | 3 | 4 |
| Silicone rubber sheet | RB | RC | RD | RA |
| Irradiation atmosphere | Nitrogen (O₂ concentration ≤ 1%) | - | - | - |
| Irradiation intensity (mW/cm²) | 10 | - | - | - |
| Irradiation time (min) | 6 | - | - | - |
| Irradiation energy (mJ/cm²) | 3,600 | - | - | - |
| Visual appearance | glossy | glossy | glossy | no gloss |
| Microscopic appearance | cracks present | no cracks | no cracks | no cracks |
| Sensation to the touch | especially hard no tack (some slip) | especially hard no tack (some slip) | hard no tack (some slip) | rubbery tack |
| Appearance after abrasion test | Level 4 | Level 4 | Level 2 | Level 1 |
| Arithmetic mean roughness difference (ΔRa) | 0.03 | 0.07 | 0.18 | 0.27 |
| Oil infiltration resistance | no coloration | slight coloration | coloration | coloration |

As shown in Table 1, in the visual appearances of sheets A to C produced in Working Examples 1 to 3, there was substantially no increase in gloss compared with sheet RA (Comparative Example 4), nor was any checking or cracking observed. Moreover, in visual inspection following the abrasion test, the abrasion track became less noticeable and the arithmetic mean roughness difference (ΔRa) became smaller as the irradiation energy increased. Furthermore, in the evaluation of resistance to oil infiltration, there was less tendency for coloration to occur.

In sheet RB obtained in Comparative Example 1 at a larger irradiation energy, an abrasion track was not observed, but a rise in gloss, the appearance of cracks and a hard sensation to the touch were observed.

In sheet D obtained in Working Example 4 with irradiation under a vacuum, the same behavior as in Working Example 1 was exhibited. Also, in sheet E obtained in Working Example 5 in which heating was carried out following irradiation, the sensation to the touch was slightly harder than for sheet D, but there was no change in gloss and a track was not observed in the abrasion test. Nor was any coloration seen when evaluating the oil infiltration resistance.

By contrast, in sheets RC and RD obtained in Comparative Examples 2 and 3 in which an attempt was made to increase the abrasion resistance by applying a silicone coating instead of photoirradiation, the resistance to marring in the abrasion test did improve, but the gloss rose, the sensation to the touch became harder and, in the evaluation of oil infiltration resistance, slight coloration was observed.

### REFERENCE SIGNS LIST

- 11:: Silicone rubber molded body
- 11A:: Oxidized layer
- 12:: Vacuum ultraviolet light

## Claims

1. A method of photohardening a silicone rubber surface, comprising a step of:
(A) hardening the surface of a silicone rubber molded body by irradiating the surface with vacuum ultraviolet light having a wavelength of 200 nm or less at an irradiation energy in the range of 10 to 3,000 mJ/cm² to form an oxidized layer in the irradiated region due to photooxidation reactions.

2. A silicone rubber surface photohardening method of claim 1 wherein the vacuum ultraviolet light is irradiated in an inert gas atmosphere.

3. A silicone rubber surface photohardening method of claim 1 or 2 wherein the source of the vacuum ultraviolet light is a xenon excimer lamp.

4. A silicone rubber surface photohardening method of any one of claims 1 to 3 further comprising a step of:
(B) aging the silicone rubber molded body that was photoirradiated in step (A), at a temperature of not more than 150°C.

5. A method for producing a silicone rubber molded body having a hardened surface, comprising a step of:
(A) hardening the surface of a silicone rubber molded body by irradiating the surface with vacuum ultraviolet light having a wavelength of 200 nm or less at an irradiation energy in the range of 10 to 3,000 mJ/cm² to form an oxidized layer in the irradiated region due to photooxidation reactions.

6. A method for producing a silicone rubber molded body having a hardened surface of claim 5, further comprising the step of:
(B) aging the silicone rubber molded body that was photoirradiated in step (A), at a temperature of not more than 150°C.

7. A silicone rubber molded body having, on at least a portion of the surface thereof, a photooxidized layer.
